# EUROPEAN PATENT SPECIFICATION

(11) **EP 3 957 551 B1**
(45) Date of publication and mention of the grant of the patent: **27.09.2023**
(21) Application number: 21192027.7
(22) Date of filing: 18.08.2021
(51) Int. Cl.: B62D 53/00, B66F 9/14, B66F 9/06

(54) **MOBILE PLATFORM TRANSPORT SYSTEM WITH EXTENSIBLE ARM**
MOBILES PLATTFORMTRANSPORTSYSTEM MIT AUSFAHRBAREM ARM
SYSTÈME DE TRANSPORT À PLATE-FORME MOBILE AVEC BRAS EXTENSIBLE

(30) Priority: 19.08.2020 PT 2020116648
(43) Date of publication of application: 23.02.2022
(73) Proprietor: Imeguisa Portugal - Indústrias Metálicas Reunidas, SA, 2950-727 Palmela (PT)
(72) Inventor: Brito Filipe, Orlando José, 2950-109 Palmela (PT)
(74) Representative: Lourenço Martinho do Rosário, Ana Margarida

(56) References cited:
- WO-A1-2020/048552
- ES-T3- 2 393 047
- US-A1- 2002 114 688

## Description

### Field of the invention

The present invention refers to a transport system that allows for automation or semi-automation of the material handling process by logistics trains in production lines inside and between factories, warehouses, or stores. More specifically, the transport system of the present invention facilitates automation of the process of placing and collecting platforms and materials through robotics, thereby eliminating the intervention of operators who manually perform this task, allowing for complete automation of the transportation and material handling processes of production lines in factories, warehouses, or stores without human intervention.

### Framework of the invention

Logistics train systems are used to transport materials inside factories, warehouses, or stores within the area of Internal Logistics or Intralogistics. It can reduce the number of trips to supply assembly lines since it can transport several loads in just one trip, compared to a single-load supply system, such as a forklift that transports one load at a time.

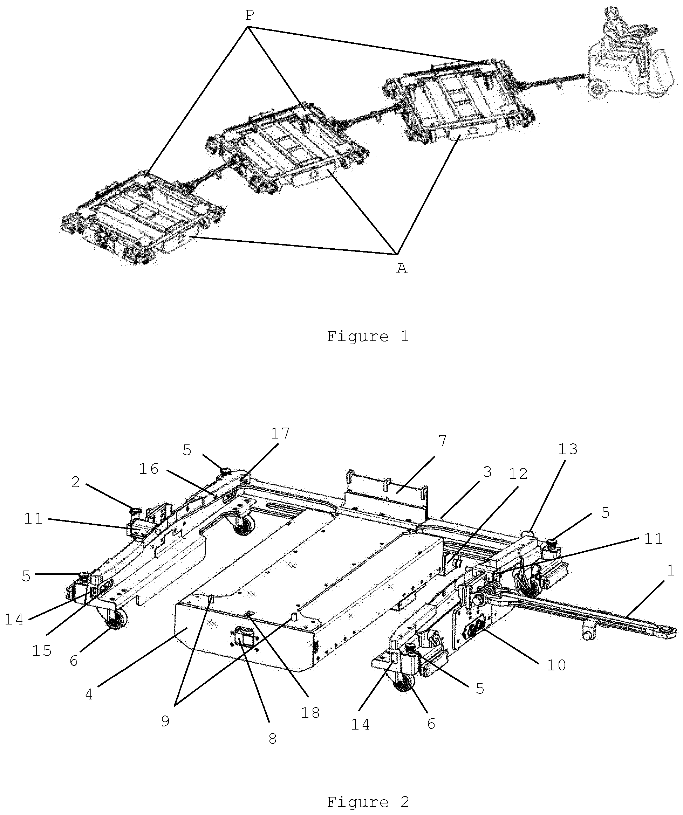

As depicted in Figure 1, a logistics train usually consists of a Towing Vehicle which tows one or more trailers that are coupled together. Depending on its structure, each trailer can support one or more mobile platforms, on which materials, goods, or merchandise are loaded for transport and distribution by the production lines of a factory, warehouse, or other productive organization.

This equipment is run by an operator who drives the towing vehicle and manually exchanges empty loads for new loads (or vice versa) at different supply points of production lines in factories, warehouses, or stores.

Handling of this equipment involves manual effort both to remove materials from and place materials onto the trailer. The user has to manually pull or push the mobile platform containing the load or material off or onto the trailer, which becomes painful or even unfeasible with heavy loads.

### Background of the invention

Since logistics train systems have been known for some time, various documentation on the state of the art refers to equipment that integrates these logistics trains, mostly related to the trailer and mobile platforms. Extendable trailers were also found.

Document US 2002/114688 A1 discloses a mobile platform transport system comprising the features of the preamble of claim 1.

Document CN110642192 refers a loading platform comprising two extendable telescopic forks powered by electric and chain drive pinions. The forks also have bolts which allow the forks to be lifted to a very limited height, which cannot be done while the forks are extended.

Additionally, document US2002124764 refers to an extendable trailer comprising a structure mounted on a trailer frame, with both parts joined by a pivot axle, which makes one part larger than the other. However, the lifting height of this trailer is also very limited, serving only for suspension purposes on uneven surfaces and not for handling loads in warehouses and stores.

### Advantages of the invention

The transport system of the present invention integrates an extendable trailer and enables automation of the material handling process by logistics train in production or assembly lines. It loads and unloads the mobile platforms automatically or semi-automatically. Therefore, it removes the human effort involved in a process which is currently executed manually.

The advantage of the system is that it can be completely automatic or semi-automatic, so it can be adapted to different realities or operational demands by different operators. The system is fully automatic when it is controlled by a machine, for example, a driverless vehicle. Usually known as Automated Guided Vehicle (AGV) or Automated Mobile Robot (AMR), it tows the train and has the intelligence to control the operation of the extendable trailer by means of communication between its automata. In turn, the system is semi-automatic when, for example, a conventional tow tractor is used to tow the train. It is driven by an operator, and the operator uses the control panel of the extendable trailer to send the instructions to perform the delivery or collection operations.

The fact that it automates the process and can be controlled by means of an automaton is in itself an advantage by facilitating and synchronizing processes that require consistency of performance, obtaining a high degree of control, which eliminates deviations arising from human error.

Since it is an electronic system equipped with automata/Programmable Logic Controllers (PLC), it is also capable of recording data related to the execution of the process or operation so that the data may be processed, analysed, controlled, and even integrated into logistics management platforms.

The extendable trailer has electronic and sensor mechanisms and components that enable the safe execution of the delivery and collection process for the elements in the process, the equipment itself and the surrounding environment, including people. The equipment can recognize the presence of a load, guarantee the correct alignment or position for transferring the material, accurately ensure the delivery and collection of the material in the designated area, and detect the presence of obstacles during the course of the central module, as well as the presence of obstacles or intrusions in the movement area of the central module during the collection process.

The equipment also has devices for locking the load in the transport position. When the extendable trailer is in transport mode, that is, when there is a load inside and it is in the raised position, it has a mechanical locking system for the mobile platform which ensures that the platform is not moved during transport. In addition to this locking system, the extendable trailer also has steel pins. When activated, they perform eccentric movements and move across the mobile platform transversally, serving to block its movement along the direction of any axis.

One major advantage is the way the central module works. It is able to extend telescopically in a continuous motion that is compatible with its submodules. Therefore, all the modules initiate the course of extension or retraction simultaneously, not independently from each other, which speeds up the delivery or collection process.

Another advantage to the extension functionality is that the distance can be programmed as needed. This means that the extendable trailer can execute a pickup or delivery at any point within its range of extension, not just at the initial and end positions of the course. This feature offers greater flexibility to the process as it allows for the execution of deliveries and pickups at different distances in one circuit, for example, in factories with different aisle widths.

This transport system is made up of mechanical and electrical systems that do not rely on pneumatic or hydraulic systems. Consequently, it is less complex, and the equipment does not require additional systems to tow the logistics train, namely, tow motorcycles or tractors. Whether it is manual, such as conventional tow motorcycles, or fully automatic, such as AGV/AMR, any machine that has electrical power can be applied to this system.

### Brief description of the drawings

These and other features are to be easily understood by the accompanying drawings, which should be taken as examples only and are not to be considered as limiting of its scope, which is exclusively defined by the appended claims.

For illustrative purposes, some of the measurements of the elements of drawings may be exaggerated and not drawn to scale. The absolute and relative dimensions do not match actual relations for carrying out the invention.

In a preferred embodiment of the invention:
Figure 1 shows a view of the transport system in a logistics train model, that is, several transport systems coupled to each other by a hitch and bar, which is, in turn, coupled to a tow tractor.
Figure 2 shows an overall view of the transport system in retracted mode.

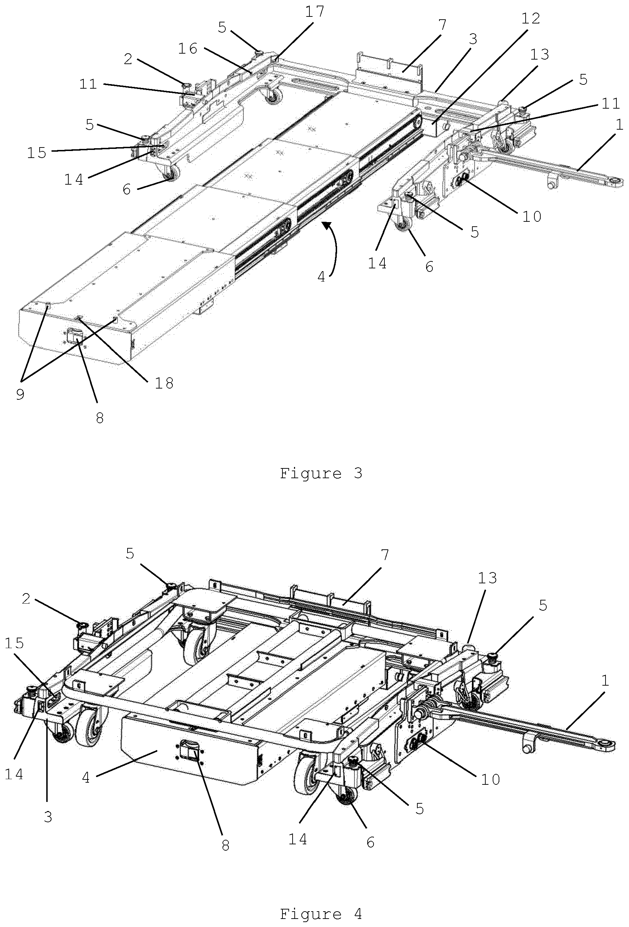

Figure 3 show the transport system in extended mode.

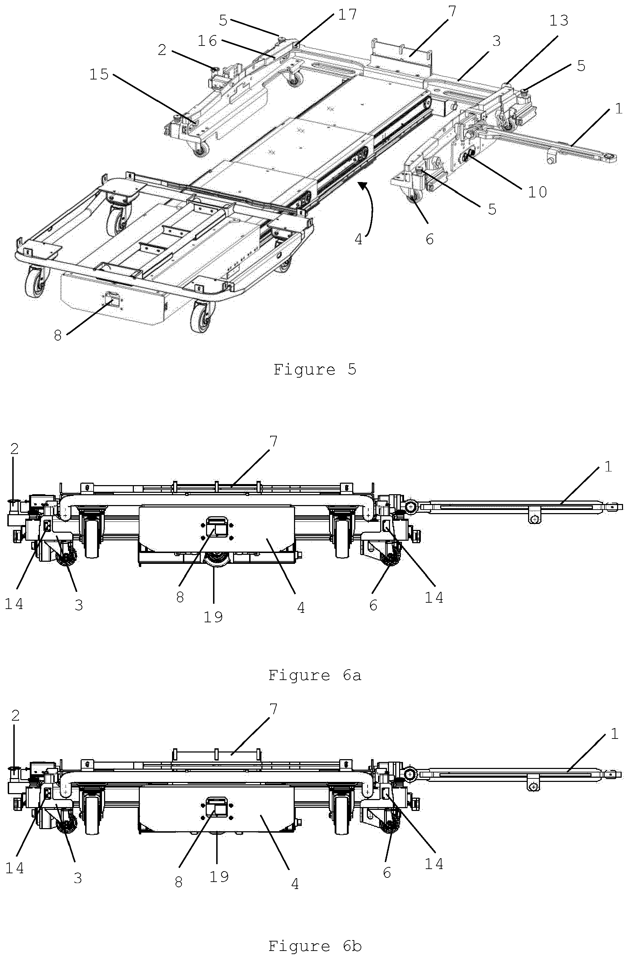

Figures 4 and 5 show the transport system in retracted and extended modes, respectively, with the mobile platform set in place.
Figures 6a and 6b show a frontal view of the transport system allowing visualisation of how the central module is lifted in transit mode and lowered in pickup and delivery mode.

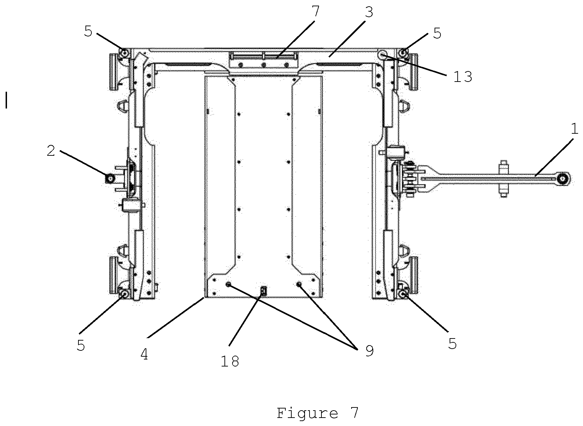

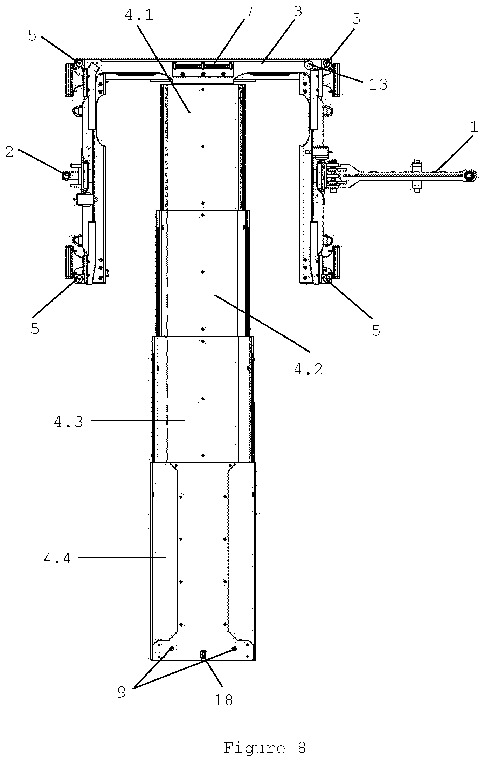

Figures 7 and 8 show top views of the equipment. Figure 7 shows the equipment in retracted mode, while figure 8 shows the equipment in extended mode.

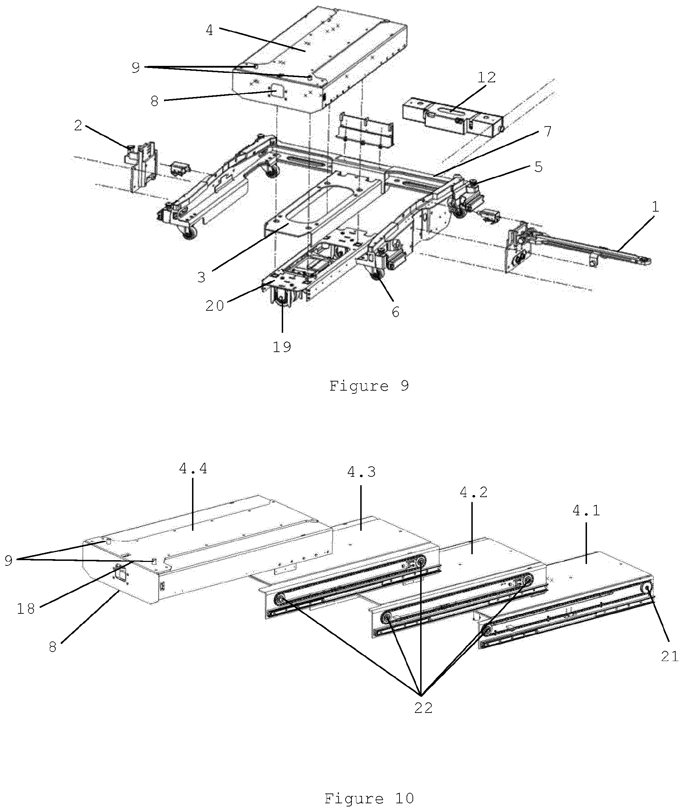

Figure 9 shows an exploded view of the equipment and its internal components, namely the lifting module, the extension module, and the control panel.
Figure 10 shows the details of the extension module and its division into several submodules.

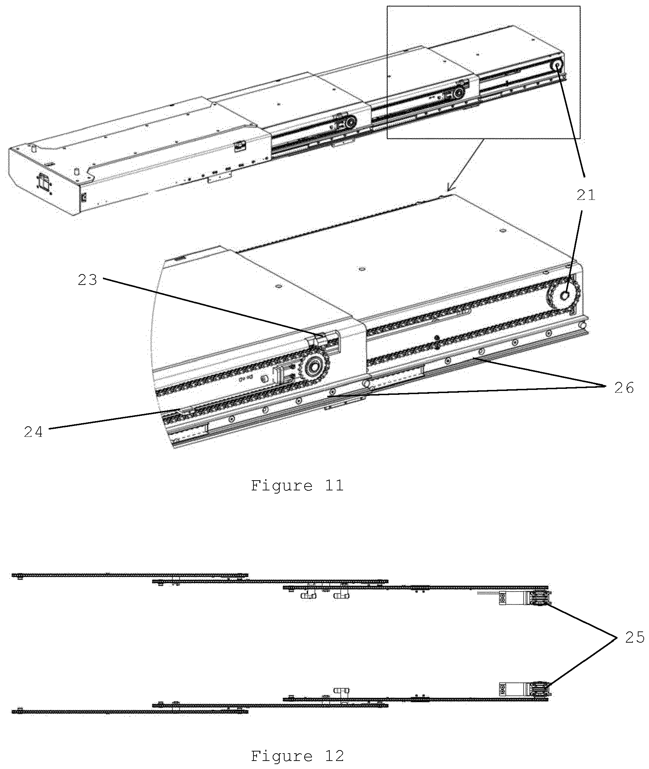

Figure 11 shows the details of the submodules, with the components involved in the extension and retraction of the submodules.
Figure 12 shows the motion transmission system, being observable the driving units and the transmission between chains.

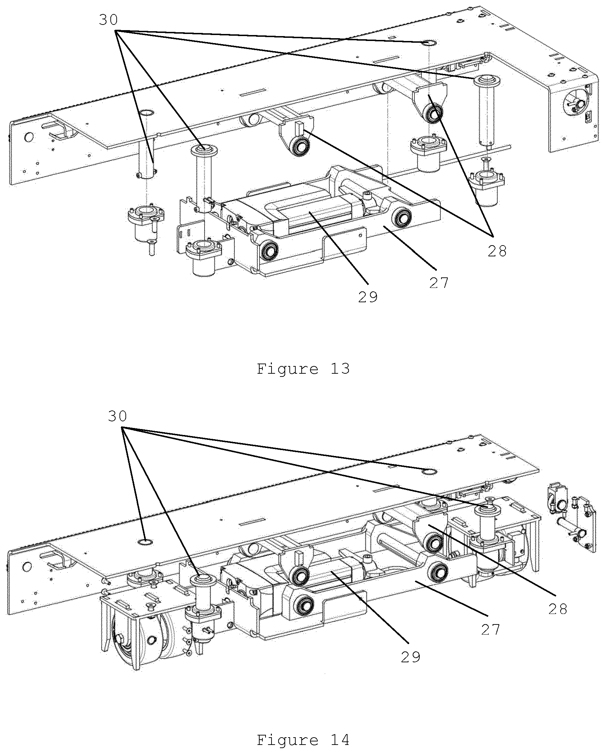

Figure 13 shows an exploded view of the lifting module.
Figure 14 shows the lifting module in the raised position.

In the figures are marked the elements and components of the equipment of the present invention:
A. extendable trailer
P. mobile platform
   1. tow bar
   2. tow hitch
   3. frame
   4. extension module
      4.1 - submodule 1
      4.2 - submodule 2
      4.3 - submodule 3
      4.4 - submodule 4
   5. safety buttons
   6. wheels
   7. locking system
   8. obstacle detection sensor
   9. retractable pins
   10. contact socket
   11. solenoid locks
   12. control panel
   13. status lights
   14. alignment sensor
   15. anti-pinch sensor
   16. positioning sensor
   17. endstop sensor
   18. mobile platform detection sensor during pickup
   19. central wheels
   20. lifting module
   21. driving pinion
   22. submodule pinion
   23. first attachment point
   24. second attachment point
   25. driving unit
   26. telescopic guide rail
   27. first structure
   28. second structure
   29. cylinder
   30. stabilizer cylinder

### Detailed description of the invention

With reference to the figures, the present invention refers to a transport system - Extendable Trailer - that facilitates automation of the material handling process by logistics train in production or assembly lines inside warehouses or stores in the automatic or semi-automatic transfer of loads or goods. As a result, it totally or partially eliminates human participation/intervention in the process, with benefits associated with the elimination of human effort, the possibility of transporting heavier loads, the automation of logistic processes, and greater control and management of logistic processes through data analysis.

This equipment was designed to support mobile platforms (P) that are specifically designed for the purpose and that have the appropriate structure and a specifically designed coupling or hitching system. This system, however, is not limited to a specific geometry, and it may support mobile platforms (P) with different dimensions or different loading weights. In a preferred embodiment of the invention, the valid dimensions for transport, in all the intermediate dimensions, range from 1 x 0,8 m to 2,4 x 1,2 m without height limitations.

The transport system of the present invention comprises an E-shaped frame (3), resting on a set of wheels (6) and on a set of central wheels (19), a contact socket (10), with a tow bar (1) and a tow hitch (2) placed on opposite sides of the frame (3), which allows the equipment of the invention to couple to other equipment, namely to other trailers or to the towing vehicle. The transport system of the present invention also has a liftable and extendable arm that can transfer the materials or goods placed on the mobile platforms (P) from its interior to its exterior or vice versa, preferably up to a maximum distance of 2,2 m and up to a load of 1000 kg in a preferred embodiment of the invention. It can also reach other distances and support other loads.

As core element of this invention, the extendable arm consists of two functional modules: the extension module (4) and the lifting module (20).

The function of the extension module (4) is to transfer materials or goods that have been placed on a mobile platform (P) inside the extendable trailer (A) to its exterior or vice versa. To do so, when the extendable arm is in the load transfer position:
- the mobile platform (P) rests on the ground with the mechanical and additional locking systems unlocked;
- the module extends telescopically by means of chains in a chain drive system driven by electric power, moving continuously and cooperatively with all the submodules (4.1) (4.2) (4.3) (4.4), up to a predetermined distance, which can be programmed according to the needs of the operation.

This means that the extendable trailer (A) can make a delivery or a pickup at any point within the reach of its extension, not just at one single distance at the beginning and end of the course.

The lifting module (20) aims to place the equipment in the transport position by raising the extendable arm. This is the position where the mobile platform (P) is raised and locked in place by the locking system (7) and the retractable pins (9). The raising of the mobile platform (P) also aims to lift the wheels of the mobile platform (P) off the ground, preventing friction and the wear and tear of the wheels of the mobile platform (P) during the continuous transit of the logistics train.

Two retractable pins (9) ensure the movement and positioning of the mobile platform (P). They are activated by solenoid locks (11) and fit into existing holes in the mobile platform (P), thereby ensuring coupling between the extendable trailer (A) and the mobile platform (P). Therefore, the retractable pins (9) are extended when the mobile platform (P) has to be secured to the extendable trailer (A), for example, or when the mobile platform (P) and the extendable trailer (A) are integrated in the logistics train. The retractable pins (9) are retracted when the mobile platform (P) has to be released from the extendable trailer (A), for example, or when the mobile platform (P) has to be delivered or collected.

The equipment of the present invention comprises a control panel (12). The process of delivering and collecting the mobile platforms (P) executed by the extendable trailer (A) is controlled electronically by an automaton/Programmable Logic Controller (PLC) found on the control panel (12). The extendable trailer (A) comprises a set of sensors, connected to the control panel (12), to detect loads, obstacles, system status, and positioning, namely through the obstacle detection sensor (8), the alignment sensor (14), the anti-pinch sensor (15), the positioning sensor (16), the endstop sensor (17) and the mobile platform detection sensor during pickup (18), which verify whether the conditions to execute the load transfer have been created. For obstacle detection, to prevent the extendable part from colliding with any obstacle on the ground, the obstacle detection sensor (8) is an area photoelectric cell. If the presence of obstacles is detected, the system immediately stops and waits for the removal of the obstacle from its working area.

As for safety, the system includes additional protection by at least one, preferentially four, safety buttons (5), which serve to interrupt power to the motors. The equipment also has status lights (13) which emit light in different colours (namely, but not exclusively, Red, Yellow, and Green) for different operating dynamics to alert people in the work environment where the system is in use. As for electrical power, there are fuses to protect the different sections from short circuits.

The extension module (4) comprises at least two, preferentially four submodules (4.1) (4.2) (4.3) (4.4), that overlap each other and are secured to each other by means of telescopic guide rails (26) which allow these structures to extend and retract longitudinally by sliding along each other telescopically. The extension of the submodules is performed by a driving force, which initiates a telescopic motion between the submodules, through driving units (25) positioned inside the extendable arm in parallel and on opposite sides, near the control panel (12). The control panel (12) activates the driving pinions (21) of the submodule that is closest to the driving units (25), simultaneously activating the submodule pinions (22) and the chains of the other submodules. This allows for the telescopic extension and retraction to occur in a continuous motion that is cooperative with the other submodules. This simultaneous, continuous motion is possible because each module is secured to the chain corresponding to the previous module through the first attachment point (23), which is secured to the upper part of the chain of the previous module, and the second attachment point (24), which is secured to the lower part of the chain of the previous module. In a preferred embodiment of the invention, the driving units (25) activate the driving pinions (21) of submodule 1 (4.1); submodule 4 (4.4) is secured to the chain of submodule 3 (4.3), which, in turn, is secured to the chain of submodule 2 (4.2), which is secured to the chain of submodule 1 (4.1). The course of the movements of extension are limited electronically by endstop sensors (17).

The lifting module (20), which is secured under the frame (3) of the equipment, is made up of two structures, a first structure (27) and a second structure (28). The first structure (27) and the second structure (28) have bearings at their respective bases. The movement of first structure (27) and of the second structure (28) is driven by a cylinder (29), placed in a substantially horizontal position, secured to the second structure (28). The first structure (27) has a ramped rail through which the second structure (28) moves, by means of the bearings of the second structure (28) which are set on the ramped rail of the first structure (27). This allows the second structure (28) to move when the cylinder (29) is activated, i.e., when it extends or retracts. This action triggers the displacement of the second structure (28) along the ramped rail of the first structure (27). The level of extension or retraction of the cylinder (29) determines the position of the second structure (28) on the rail and, consequently, the elevation of the extendable arm. When the cylinder (29) retracts, the bearings of the second structure (28) are moved towards the top of the ramped rail of the first structure (27), thereby raising the lifting module (20). When the cylinder (29) is completely retracted, the bearings of the second structure (28) are at the top of the ramped rail of the first structure (27), and the extendable arm is in the transport position. When the cylinder (29) extends, the bearings of the second structure (28) are moved towards the base of the ramped rail of the first structure (27), thereby lowering the lifting module (20). In this position, the extendable arm is in the load transfer position. The lifting module (20) also includes at least two, preferentially four, stabilizer cylinders (30) of the extendable arm, which pass transversely through the frame (3) and are secured to the extension module (4). The stabilizer cylinders (30) allow the extendable arm to remain substantially parallel to the ground and stabilize the position of the extension module (4), regardless of where it is. The lifting module (20) can only lift when the extension module (4) is in the retracted position, so the extendable arm can only be in the raised position when it is retracted.

The cylinder (29) can be selected from, but not limited to, pneumatic, hydraulic, and electric cylinders.

## Claims

1. A mobile platform transport system with an extendable arm comprising:
- a frame (3); and
- an extendable arm comprising:
- an extension module (4) comprising at least two submodules secured to each other by means of telescopic guide rails (26); and
- a lifting module (20) comprising:
- a first structure (27); and
- a second structure (28) coupled to a cylinder (29) ;
wherein:
- the first structure (27) including a ramped rail through which the second structure (28) moves;
- the second structure (28) including bearings of the second structure (28) at the base, which are set on the ramped rail of the first structure (27) and enable the second structure (28) to move when the cylinder (29) is activated; **characterized in**
- the lifting module (20) including at least two stabilizer cylinders (30) of the extendable arm.

2. System according to claim 1, wherein the at least two submodules additionally extending telescopically by means of driving pinions (21), activated by driving units (25), which activate the submodules pinions (22) and chains of the submodules.

3. System according to any of the preceding claims, wherein it comprises a control panel (12) that contains an automaton/Programmable Logic Controller (PLC) .

4. System according to any of the preceding claims, wherein the at least two stabilizer cylinders (30) of the extendable arm pass transversely through the frame (3) and attach to the extension module (4).

5. System according to any of the preceding claims, wherein it comprises features for coupling the mobile platforms.

6. System according to claim 5, wherein the means for coupling mobile platforms are retractable pins (9) activated by solenoid locks (11).

7. System according to claim 5, wherein the means for coupling mobile platforms is a mobile platform locking system (7).

8. System according to any of the preceding claims, wherein it comprises a frame (3) that includes a tow bar (1) and a tow hitch (2) that allows coupling to other equipment, namely, but not exclusively, to other trailers and tow tractors.

9. System according to any of the preceding claims, wherein the extension module (4) comprises four submodules (4.1) (4.2) (4.3) (4.4).

10. System according to any of the preceding claims, wherein it comprises a set of sensors connected to the control panel (12), namely an obstacle detection sensor (8), an alignment sensor (14), an anti-pinch sensor (15), a position sensor (16), an endstop sensor (17), and a mobile platform detection sensor during pickup (18).

11. System according to any of the preceding claims, wherein it comprises a set of wheels (6) and a set of central wheels (19) at the base of the frame (3).

12. System according to any of the preceding claims, wherein it comprises at least one safety button (5).

13. System according to any of the preceding claims, wherein it comprises driving units (25) inside the extendable arm.

14. Use of the system claimed in the claims 1 to 13 in production lines, assembly lines, warehouses, or stores.

## Patentansprüche

1. Mobiles Plattformtransportsystem mit ausfahrbarem Arm, bestehend aus:
- einen Rahmen (3); und
- einen ausziehbaren Arm, umfassend:
- ein Ausfahrmodul (4) mit mindestens zwei Untermodulen, die mittels teleskopischer Führungsschienen (26) aneinander befestigt sind; und
- ein Hebemodul (20), das Folgendes umfasst:
- eine erste Struktur (27); und
- eine zweite Struktur (28), die mit einem Zylinder (29) verbunden ist;
wobei:
- die erste Struktur (27) eine Rampenschiene aufweist, durch die sich die zweite Struktur (28) bewegt;
- die zweite Struktur (28) Lager der zweiten Struktur (28) an der Basis aufweist, die auf die Rampenschiene der ersten Struktur (27) gesetzt sind und die Bewegung der zweiten Struktur (28) ermöglichen, wenn der Zylinder (29) aktiviert wird;
**dadurch gekennzeichnet, dass**
- das Hebemodul (20) mindestens zwei Stabilisierungszylinder (30) des ausfahrbaren Arms umfasst.

2. System nach Anspruch 1, bei dem die mindestens zwei Untermodule zusätzlich teleskopisch durch Antriebsritzel (21) ausfahren, die durch Antriebseinheiten (25) aktiviert werden, welche die Untermodulritzel (22) und Ketten der Untermodule aktivieren.

3. System nach einem der vorhergehenden Ansprüche, **dadurch gekennzeichnet, dass** es ein Bedienfeld (12) umfasst, das einen Automaten/Programmierbare Logiksteuerung (SPS) enthält.

4. System nach einem der vorhergehenden Ansprüche, bei dem die mindestens zwei Stabilisierungszylinder (30) des ausfahrbaren Arms quer durch den Rahmen (3) verlaufen und an dem Ausfahrmodul (4) befestigt sind.

5. System nach einem der vorhergehenden Ansprüche, **dadurch gekennzeichnet, dass** es Merkmale zur Kopplung der mobilen Plattformen aufweist.

6. System nach Anspruch 5, wobei es sich bei den Mitteln zur Kopplung der mobilen Plattformen um einziehbare Stifte (9) handelt, die durch Magnetverschlüsse (11) aktiviert werden.

7. System nach Anspruch 5, wobei es sich bei den Mitteln zur Kopplung der mobilen Plattformen um ein Verriegelungssystem für mobile Plattformen (7) handelt.

8. System nach einem der vorhergehenden Ansprüche, **dadurch gekennzeichnet, dass** es einen Rahmen (3) umfasst, der eine Deichsel (1) und eine Anhängerkupplung (2) enthält, die das Ankuppeln an andere Geräte ermöglicht, insbesondere, aber nicht ausschließlich, an andere Anhänger und Zugmaschinen.

9. System nach einem der vorhergehenden Ansprüche, wobei das Ausfahrmodul (4) vier Teilmodule (4.1) (4.2) (4.3) (4.4) umfasst.

10. System nach einem der vorhergehenden Ansprüche, wobei es eine Reihe von Sensoren umfasst, die mit dem Bedienfeld (12) verbunden sind, nämlich einen Hinderniserkennungssensor (8), einen Ausrichtungssensor (14), einen Einklemmschutzsensor (15), einen Positionssensor (16), einen Endstoppsensor (17) und einen Sensor zur Erkennung einer beweglichen Plattform während der Aufnahme (18).

11. System nach einem der vorhergehenden Ansprüche, wobei es einen Satz Räder (6) und einen Satz zentraler Räder (19) an der Basis des Rahmens (3) umfasst.

12. System nach einem der vorangehenden Ansprüche, **dadurch gekennzeichnet, dass** es mindestens einen Sicherheitsknopf (5) umfasst.

13. System nach einem der vorhergehenden Ansprüche, wobei es Antriebseinheiten (25) im Inneren des ausfahrbaren Arms umfasst.

14. Verwendung des in den Ansprüchen 1 bis 13 beanspruchten Systems in Produktionslinien, Fließbändern, Lagerhäusern oder Geschäften.

## Revendications

1. Système de transport de plateformes mobiles avec un bras extensible comprenant:
- un cadre (3); et
- un bras extensible comprenant:
- un module d'extension (4) comprenant au moins deux sous-modules fixés ensemble à l'aide de guides télescopiques (26); et
- un module de levage (20) comprenant:
- une première structure (27); et
- une deuxième structure (28) couplée à un cylindre (29) ;
dans lequel:
- la première structure (27) comprend un rail à rampe à travers lequel la seconde structure (28) se déplace;
- la seconde structure (28) comprend des roulements de la seconde structure (28) à la base, qui sont placés sur le rail à rampe de la première structure (27), permettent à la seconde structure (28) de se déplacer avec l'actionnement du cylindre (29);
**caractérisé en ce que**
- le module de levage (20) comprend au moins deux cylindres stabilisateurs (30) du bras extensible.

2. Système selon la revendication 1, **caractérisé en ce que** les au moins deux sous-modules s'étendent en outre de manière télescopique au moyen de pignons d'entraînement (21), activés par des unités d'entraînement (25), qui activent les pignons des sous-modules (22) et les chaînes des sous-modules.

3. Système selon l'une quelconque des revendications précédentes, **caractérisé en ce qu'**il comprend un panneau de commande (12) qui contient un automate/contrôleur logique programmable (PLC).

4. Système selon l'une quelconque des revendications précédentes, caractérisé en ce les au moins deux cylindres stabilisateurs (30) du bras extensible traversent transversalement le cadre (3) et se fixent au module d'extension (4).

5. Système selon l'une des revendications précédentes, **caractérisé en ce qu'**il comprend des fonctions de couplage des plateformes mobiles.

6. Système selon la revendication 5, **caractérisé en ce que** les moyens d'accouplement des plateformes mobiles sont des goupilles rétractables (9) actionnées par des solénoïdes de verrouillage (11).

7. Système selon la revendication 5, **caractérisé en ce que** les moyens d'accouplement des plateformes mobiles sont un système de verrouillage des plateformes mobiles (7).

8. Système selon l'une quelconque des revendications précédentes, **caractérisé en ce qu'**il comprend un châssis (3) qui comporte une barre de remorquage (1) et un crochet de remorquage (2) permettant l'attelage à d'autres équipements, notamment, mais non exclusivement, à d'autres remorques et tracteurs de remorquage.

9. Système selon l'une quelconque des revendications précédentes, **caractérisé en ce que** le module d'extension (4) comprend quatre sous-modules (4.1) (4.2) (4.3) (4.4) .

10. Système selon l'une quelconque des revendications précédentes, **caractérisé en ce qu'**il comprend un ensemble de capteurs reliés au panneau de commande (12), à savoir un capteur de détection d'obstacle (8), un capteur d'alignement (14), un capteur anti-pincement (15), un capteur de position (16), un capteur de fin de course (17), et un capteur de détection de plateforme mobile en cours de prise en charge (18).

11. Système selon l'une quelconque des revendications précédentes, **caractérisé en ce que** le cadre (3) comprend à la base un jeu de roues (6) et un jeu de roues centrales (19) .

12. Système selon l'une quelconque des revendications précédentes, **caractérisé en ce qu'**il comprend au moins une boutonnière de sécurité (5).

13. Système selon l'une quelconque des revendications précédentes, **caractérisé en ce qu'**il comprend des unités d'entraînement (25) à l'intérieur du bras extensible.

14. Utilisation du système revendiqué dans les revendications 1 à 13 sur chaînes de production, sur chaînes d'assemblage, dans des entrepôts ou dans des magasins.
